# EUROPEAN PATENT APPLICATION

(11) **EP 0 605 892 A1**
(43) Date of publication of application: **13.07.1994**
(21) Application number: 93121061.1
(22) Date of filing: 29.12.1993
(51) Int. Cl.: G06F 15/64

(54) **Methods and apparatus for processing image data utilizing stored compressed look-up table (LUT) representations of N to M-dimensional transforms**

(30) Priority: 31.12.1992 US 999638
(71) Applicant: EASTMAN KODAK COMPANY, Rochester, New York 14650-2201 (US)
(72) Inventor: Gandhi, Bahvan R., c/o EASTMAN KODAK COMPANY, Rochester, New York 14650-2201 (US); Sullivan, James R., c/o EASTMAN KODAK COMPANY, Rochester, New York 14650-2201 (US)
(74) Representative: Schmidt, Peter, Dipl.-Ing.

(57) **Abstract**

Image processing devices and systems are disclosed which utilize stored compressed look-up table (LUT) representations of N to M-Dimensional transforms for processing input image data. The disclosed devices and systems allow the transforms represented by each of the stored compressed LUTs to be selectively applied to the image data being processed. Related methods for processing image data utilizing stored compressed transform representative LUTs are also described. Storing the LUTs in a compressed format and being able to use them for image processing purposes, conserves memory resources, can reduce memory cost and allows a broader range of devices to be supported by (or be used in conjunction with) a given image processing device or system. The invention is also directed to methods and apparatus for calibrating image processing devices and systems utilizing stored compressed transform representative LUTs.

## Description

### BACKGROUND OF THE INVENTION

### 1. Field of the Invention

The invention relates generally to image processing devices such as, for example, printers, scanners, cameras, digitizers, film writers, photo-CD players, general purpose work stations and the like, and image processing systems that include a plurality of image processing devices, which process image data utilizing one or more N to M-dimensional transforms, where N and M are integers each greater than or equal to one.

The invention more particularly relates to image processing devices and systems which utilize stored look-up table (LUT) representations of the aforementioned transforms and which enable a desired stored transform to be selectively applied to the image data being processed.

In accordance with one aspect of the invention, each LUT in a set of LUTs (where each LUT represents an N TO M-dimensional transform which could be applied to the input data), is stored in compressed form in storage means included in or which is otherwise accessible to the image processing device or system.

According to a preferred embodiment of the invention, the user may select the compressed N TO M-dimensional transform representative LUT to be applied to the image data being processed. The selected LUT is decompressed (only if necessary, as will be explained hereinafter) and an image processor applies the transform represented by the decompressed version of the selected LUT to the input image data.

A further aspect of the invention is directed to providing image processing devices and systems which allow multiple transforms to be applied to the same image data, where the multiple transforms are selected from the aforementioned set of stored (N TO M-dimensional transform representative) compressed LUTs. This feature may be used, for example, to support a multiplicity of output devices coupled to an image processing device.

### 2. Description of the Prior Art

Well known methods and apparatus exist for transforming, with the aid of an image processor, one data representation of an image into another representation of the image within image processing devices and systems. One class of transform which may be applied by an image processor to input image data is referred to herein as "N to M dimensional" transforms, where N and M are integers greater than or equal to 1.

When N and M both equal one, the transform is said to be "one dimensional". An example of a one dimensional transform is a simple tonal re-mapping of monochrome imagery. Otherwise the transform is referred to in the art as being "multi-dimensional". An example of a multi-dimensional transform is a mapping that converts color imagery from one color representation into some other representation.

A specific example of a multi-dimensional transform, presented for the sake of illustration only, is a mapping from a Red, Green Blue (RGB) three color space representation of image data, into a Cyan, Magenta, Yellow, Black (CMYK) four color space representation of the same image data. For the aforementioned transform, N equals 3 and M equals 4.

Other examples of multi-dimensional transforms, together with an indication of specific device environments in which they may be applied, include transforms which take red, green and blue (RGB) response signals from an input scanner and convert the data into the CIE tri-stimulus values (XYZ), and transforms which convert CIELAB image data into cyan, magenta, yellow, and black (CMYK) drive signals for an output printer.

It is well known by those skilled in the art that the aforementioned N to M-dimensional transforms may be implemented using look-up tables (LUTs). For example, an image processor could access the contents of a selected LUT in a prescribed manner (e.g., using image data input into an image processing device or system as an index to the LUT), and output a value stored in the LUT to effectively perform the desired data transformation.

Many image processing devices and systems are also known which utilize data compression techniques to reduce memory requirements and increase process throughput. However, the data compression techniques used in such devices and systems are generally applied only to the actual data being processed (for example, the input image data itself); not to the LUTs used to perform desired data transformation processes.

In other known image processing devices and systems, data compression techniques have been used for purposes unrelated to image processing per se. An example is the video signal processor taught by Yamashita in Japanese Patent Number 61-090575, where data compression is used to perform an LUT conversion process.

Since all the known image processing devices and systems that utilize LUT representations of N to M-dimensional transforms, store the LUTs in an uncompressed form, the number of LUTs that are capable of being stored may be subject to image processing device or system dependent memory constraints.

In view of such constraints, it would be desirable to provide methods and apparatus for processing image data utilizing stored compressed LUT representations of N to M-dimensional transforms since (1) a more efficient utilization of memory resources would become possible, and (2) as a result of each stored transform representative LUT requiring less memory space, more "transforms" could be stored.

These features would allow a broader range of "follow on" devices (such as different types of output printers, display devices, etc.) to be supported by the image processing device or system performing the transforms; particularly when compared to present day image processing devices and systems which have the potential for being severely limited by the aforementioned memory constraints. For example, by using compressed LUTs the same memory space presently required to support a single output device could be used to support a plurality of devices and/or device types.

In addition to the Yamashita patent referenced hereinabove, other recently issued patents illustrate the state of the relevant art of imaging systems which use transform representative LUTs and/or data compression techniques for image processing purposes. These include Japanese Patent Number 3-53767, to Masuda; U.S. Patent Number 5,079,621, to Daly et al.; U.S. Patent Number 5,070,532, to Faul et al.; U.S. Patent Number 5,065,229, to Tsai et al.; U.S. Patent Number 5,060,060, to Udagawa et al.; U.S. Patent Number 4,870,479, to Dubner; U.S. Patent Number 4,843,632, to Lee et al.; and U.S. Patent Number to Mintzer et al.

Japanese Patent No. 3-53767, to Masuda, relates to a picture data compression and restoration system, including a data restoration look-up table section, which converts RGB (red, green and blue) data to CMY (cyan, magenta and yellow) data, and outputs K (black) data as well. The system utilizes a "compression LUT" (not a compressed LUT) to perform a color coordinate conversion process.

U.S. Patent Number 5,079,621, to Daly et al., describes a color imagery compression/decompression mechanism which employs a contrast sensitivity function model of the human visual system for color images to derive normalization values for compressing chromatic components of color imagery data. Only the data being processed is compressed; not transforms (LUTs) applied to data by the image processing system.

U.S. Patent Number 5,070,532, to Faul et al., describes a color image data encoding technique which results in data being compressed. Again, only the data being processed is compressed; not the transforms (LUTs) applied to data by the image processing system.

U.S. Patent Number 5,065,229, to Tsai et al., which teaches a compression method and apparatus for single-sensor color imaging systems; U.S. Patent Number 5,060,060, to Udagawa et al., which teaches performing data signal compression and dynamic range adjustment in a color image processor; U.S. Patent Number 4,870,479, to Dubner, which teaches a video graphics memory storage reduction technique; U.S. Patent Number 4,843,632, to Lee et al., which teaches a compressed image expansion system; and U.S. Patent Number to Mintzer et al., which teaches an image reduction method; all call for the use of data compression techniques and/or the use of look-up tables to process image data. Once again, none of the aforementioned patents are directed to utilizing stored compressed LUTs for the purposes indicated hereinabove.

Beside being utilized to perform simple tonal re-mappings of monochrome imagery and conversions of color imagery from one color representation into some other representation (as indicated hereinabove), LUTs representing N to M-dimensional transforms have also been used for color calibrating input and output devices and for generally converting image data from one representation to another whether color oriented or not.

For background purposes only, it should be noted that some of the more common functional color transforms are described by R.W.G. Hunt in a publication entitled "Measuring Colour", published by John Wiley and Sons, at pages 197-198, and by F.W. Billmeyer, Jr. and M. Saltzman, in a publication entitled "Principals of Color Technology", also published by John Wiley and Sons, at pages 81-110.

Although not constituting a part of the invention per se, methods for generating transform representative LUTs, for storing a plurality of such LUTs for image processing purposes when memory allows, together with several data compression techniques presently used for image processing purposes, will be briefly described herein for the sake of completeness.

Methods for generating multi-dimensional color calibration tables are well known to those skilled in the art as exemplified by H.J. Trussell in an article entitled "Application of Set Theoretic Methods To Color systems", published in Color Research and Applications, Volume 16, No. 1, February, 1991, at pages 31-41; and by the teachings of W.F. Schreiber (in U.S. Patent Number 4,500,919) and P.C. Pugsley (in U.S. Patent Number 4,307,249).

According to these references, look-up tables may be generated using measured visual color responses from color patches with known device colors. The mapping of the visual color response to the device color to reproduce the color response at the output of a given device is then implemented with a look-up table.

As indicated hereinabove, present day image processing devices and systems that use transform representative look-up tables, store these LUTs in an uncompressed form and are not otherwise designed to operate using compressed LUTs. For example, in addition to storing the compressed LUTs, the image processing device and system would need to be designed to decompress compressed LUTs before the transform represented by a given compressed LUT was applied to the image data being processed.

In such devices and systems, as pointed out hereinbefore, the number of look up tables which can be stored may be limited by device and/or system memory constraints. However, it should be noted that if memory is not an issue the concept of storing a plurality of transform representative LUTs in a given image processing device is taught by Juday et al., in U.S. Patent Number 5,067,019.

As for data compression techniques per se, which are well known in the prior art to support a variety of image processing applications, such techniques may best be described (in general terms for background purposes only) as coupled processes consisting of a data transformation followed by quantization and encoding. The data transform pre-processes the data to effect a new, more compact data representation.

The pre-processed data can then, for example, be quantized, as taught by J. R. Sullivan in U.S. Patent Number 4,885,636, and T. J. Lynch in the publication entitled "Data Compression Techniques and Applications", published by Van Nostrand Reinhold; and encoded using, for example, lossless encoding techniques (as taught by D. A. Huffman in an article entitled "A Method for the Construction of Minimum Redundancy codes", published in the Proceedings of the IRE, Volume 40, at pages 1098-01101, and as taught by Lempel et al in an article entitled "A Universal Algorithm for Sequential Data Compression", published in the IEEE Transactions On Information Theory, Volume IT-23(3), at pages 337-343); arithmetic coding (as taught in an article entitled "Q-Coder" appearing in the IBM Journal of Research and Development, in Volume 32(6), at pages 715-840); or some other desired encoding algorithm.

As indicated hereinabove, the known data compression techniques, applied in the image processing context, have only been used to compress image data per se; not the transform representative LUTS which are stored for use in processing input image data in either compressed or uncompressed form.

It should be noted that well known compression methodologies, such as differential pulse code modulation (DPCM) and discrete cosine transform (DCT), may be readily extended to span the N to M-dimensional space described by the look-up tables. As an example, due to the correlated and smoothly varying nature of color transformation tables, predictive and interpolative techniques are attractive in transforming such look-up table data into a compact representation. However, alternate techniques may be used to produce the compact LUTs without departing from the spirit or scope of the invention.

Specific techniques which may be used to compress the transform representative LUTs include, for example, hierarchical, lossless, or lossy compression techniques, depending on the nature of the transform data.

Hierarchical methods would allow for multi-resolution reconstruction of the LUTs. Lossless techniques may be used for compressing calibration data that cannot incur any numerical loss. However, there are situations in which some numerical loss may be acceptable, such as where the transform data is inherently noisy or over specified in terms of visual precision of color differences. In these situations a lossy compression method may be most suitable for use, with the advantage of producing an increased compression ratio.

Because the compressed LUTs require less memory, multiple look-up tables may be stored in an image processing device. A single transformation from this bank of LUTs may then (according to the invention to be described in detail hereinafter) be selected, decompressed, and loaded into working memory. Using the loaded decompressed look-up table, an image processor having access to both the decompressed LUT and the image data, may transform the image data from one space to another, calibrate the image processing device, etc.

In view of the state of the art and other reasons set forth hereinabove, it would be desirable to provide image processing devices and systems which incorporate compressed transform representative LUTs which, for example, serve as device calibration and/or transformation tables. Furthermore, it would be desirable to provide image processing devices and systems which are able to store a plurality of the aforementioned compressed LUTs either directly in image processing device memory or in memory readily accessible to an image processing device or system.

Still further, it would be desirable to provide image processing devices and systems which are able to selectively decompress the stored compressed LUTs and use the transforms represented by the decompressed LUTs to perform device calibration and/or image data transformation functions.

Further yet, it would be desirable to provide image processing devices and systems which enable a plurality of devices attached to a given image processing device to be supported in situations where memory constraints of the image processing device would prohibit multiple device support using LUTs which are not stored in compressed form.

It would also be desirable to provide methods, for use in the devices and systems contemplated by the invention, which include the use of stored compressed LUTs (for the purposes stated hereinbefore) in process steps used to transform image data.

### SUMMARY OF THE INVENTION

Accordingly, it is a primary object of the invention to provide methods and apparatus for processing image data utilizing stored compressed LUT representations of N to M-dimensional transforms.

It is a further object of the invention to provide image processing devices and systems which utilize the aforementioned methods and apparatus to perform device calibration and/or image data transformation functions.

Furthermore, it is an object of the invention to provide image processing devices and systems which are able to store a plurality of the aforementioned compressed LUTs either directly in image processing device memory or in memory readily accessible to an image processing device or system.

Still further, it is an object of the invention to provide methods and apparatus which allow stored compressed LUTs to be individually selected for decompression and application to input image data, and to further provide methods and apparatus for decompressing selected LUTs only when necessary. For example, if a LUT is selected and decompressed to effect a first transformation, and if the LUT remains in decompressed form in the working memory space of an image processor after performing the first transformation, it would be unnecessary to decompress the same LUT if it were chosen again for a subsequent application to the same or even different image data.

Further yet, it is an object of the invention to provide methods and apparatus which enable a plurality of devices attached to a given image processing device to be supported through the use of stored compressed LUTs and the application of multiple transforms (represented by multiple stored compressed LUTs) to an input data stream, where the transforms represented by the stored compressed LUTs are designed to support the attached plurality of devices.

Yet another object of the invention is to provide methods and apparatus for processing image data which conserve memory resources associated with image processing devices and systems by utilizing stored compressed LUT representations of N to M-dimensional transforms to increase the number of transform representative LUTs that can be stored in a given amount of memory space.

Further still, it is an object of the invention to provide methods and apparatus which may be readily integrated into existing image processing devices and systems to allow compressed N to M-dimensional transformations to be stored and selectively used for image processing purposes (assuming sufficient memory capacity and processing capability is available within or to the subject image processing device or system).

In accordance with one aspect of the invention, each LUT in a set of LUTs (where each LUT represents an N TO M-dimensional transform which could be applied to the input data), is stored in compressed form in storage means included in or which is otherwise accessible to the image processing device or system.

According to a preferred embodiment of the invention, the user may select the compressed N TO M-dimensional transform representative LUT to be applied to the image data being processed. The selected LUT is decompressed (only if necessary, as explained by example hereinabove), and an image processor applies the transform represented by the decompressed version of the selected LUT to the input image data.

A further aspect of the invention is directed to providing image processing devices and systems which allow multiple transforms to be applied to the same image data, where the multiple transforms are selected from the aforementioned set of stored (N TO M-dimensional transform representative) compressed LUTs. This feature may be used, for example, to support a multiplicity of output devices coupled to an image processing device.

A preferred embodiment of apparatus contemplated by the invention is an image processing device, having storage means associated therewith and a set of N to M-dimensional transform representative look-up tables (LUTs) stored in said storage means in compressed form, for transforming image data input to said device from a first representation to another representation, comprising: (a) means for selecting a transform representative LUT stored in the storage means; (b) means for decompressing the selected LUT; and (c) means for applying the transform corresponding to the decompressed LUT to the input image data to effect the transformation of the image data from the first representation to the second representation.

A first preferred embodiment of a method for transforming image data input to an image processing device from a first representation to another representation (as contemplated by the invention), comprises the steps of: (a) storing a set of N to M-dimensional transform representative look-up tables (LUTs) in compressed form; (b) selecting one of the stored compressed transform representative LUTs so that the represented transform may be applied to the image data; (c) decompressing the selected LUT; and (d) transforming the image data from the first representation to the second representation by applying the transform represented by the selected decompressed LUT to the image data.

An alternate preferred method for transforming image data input to an image processing device from a first representation to another representation (as contemplated by the invention), comprises the steps of: (a) storing a set of N to M-dimensional transform representative look-up tables (LUTs) in compressed form; (b) selecting one of the stored compressed transform representative LUTs for application to the image data; and (c) determining if the selected compressed transform representative LUT exists in working memory in decompressed form.

If it is determined, by practicing the alternate preferred set of method steps set forth hereinabove, that the selected compressed transform representative LUT already exists in working memory in decompressed form, then no decompression step (as set forth at step (c) of the first preferred method claim set forth hereinabove), need be performed. However, the alternate preferred method contemplated by the invention further comprises the step of decompressing the selected compressed transform representative LUT whenever it is determined that the selected LUT does not exist in working memory in decompressed form.

Still further aspects of the invention are directed to methods and apparatus for performing device calibration utilizing stored compressed transform representative LUTs, and methods and apparatus for supporting a multiplicity of devices attached to a given image processing device, where the image processing device has access to a set of stored compressed transform representative LUTs which convert image data input to the image processing device into a format which can be used by the multiplicity of devices attached thereto.

It should be noted that although a principal aspect of the invention is to provide methods and apparatus which utilize N TO M-dimensional transform representative LUTs stored in compressed form in some type of storage device; the technique used to compress these tables is not a part of the instant invention per se except to the extent that decompression of a given compressed LUT requires information concerning how the table was originally compressed.

As indicated hereinabove, many different well known compression techniques may be used to compress a LUT and include, for example, hierarchical, lossless, and lossy techniques, assumed for the purposes of the present invention to be performed offline. The invention features techniques for processing image data utilizing stored compressed LUT representations of N to M-dimensional transforms to conserve memory resources, reduce memory cost and increase the number of transform representative LUTs that can be stored in a given amount of memory space. This feature of the invention allows a broader range of devices to be supported by the image processing device or system performing the transforms; particularly when compared to present day image processing devices and systems which would be more severely limited by memory constraints when storing uncompressed transform representative LUTs.

The invention also features methods and apparatus which may be readily integrated into existing image processing devices and systems to allow compressed N to M-dimensional transformations to be stored and selectively used for image processing purposes (assuming sufficient memory capacity and processing capability is available within or to the subject image processing device or system).

These and other objects, embodiments and features of the present invention and the manner of obtaining them will become apparent to those skilled in the art, and the invention itself will be best understood by reference to the following detailed description read in conjunction with the accompanying Drawing. ♀ BRIEF DESCRIPTION OF THE DRAWING
FIG. 1 depicts, in the form of an equipment block diagram (which also serves as a process flow chart), the components of an exemplary image processing device contemplated by the invention. For the sake of illustration only, the image processing device depicted in FIG. 1 is shown following a scanner.
FIG. 2 depicts, in the form of an equipment block diagram (which also serves as a process flow chart), the components of the same exemplary image processing device depicted in FIG. 1, followed by (again, for the sake of illustration only) an output device.

### DETAILED DESCRIPTION

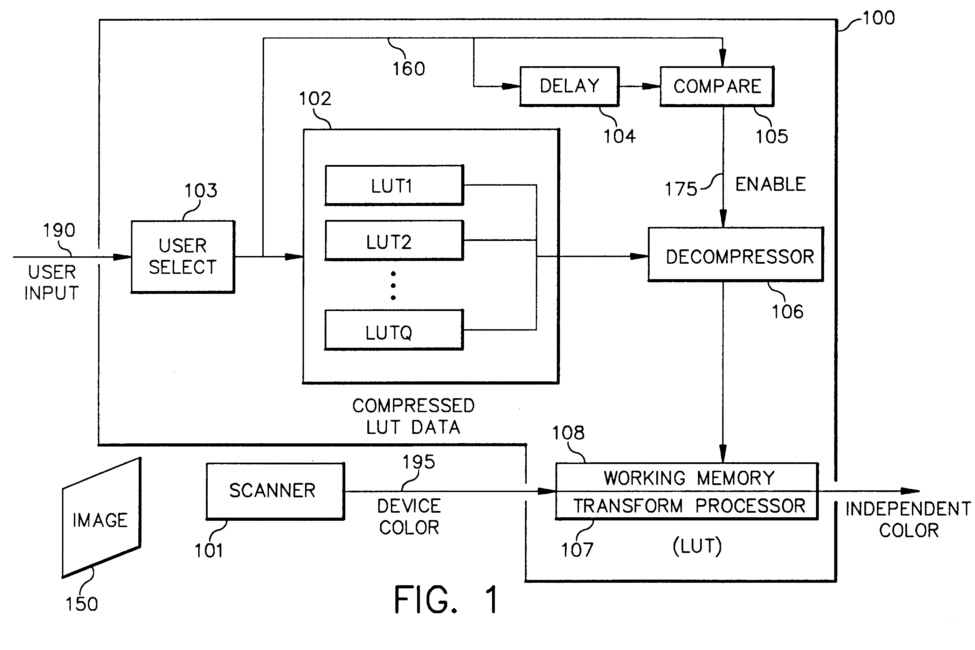

Reference should now be made to FIG. 1 which, as indicated hereinbefore, depicts (in the form of an equipment block diagram which also serves as a process flow chart), the components of an exemplary image processing device 100 contemplated by the invention. In the illustrative application of the invention depicted in FIG. 1, the Q compressed transform representative LUTs are used to transform image data from a device dependent color space into a device independent color space.

Image processing device 100, as depicted in FIG. 1, is shown following scanner 101 which is used to capture image 150. Scanner 101 may, for example, be realized by a commercially available camera system, such as the Kodak professional DCS 200ci Digital Camera (which is purely a data capture type device), or other types of data input means (such as a digitizer, general purpose work station implemented using a personal computer, etc.), which include data storage and/or processing capabilities.

The image data input means and the imaging processing devices (and systems) contemplated by the invention, may be separate units as shown in FIG. 1 (scanner 101 and image processing device 100 are shown as separate units coupled by link 195). However, the image processing components depicted as part of device 100 in FIG. 1 may be included as part of image data input means per se, so long as sufficient memory and processing power are resident in or associated with the input means to enable the invention to be practiced in the manner described hereinafter.

FIG. 1 goes on to show, in accordance with the teachings of a preferred embodiment of the invention, a set of Q compressed transform representative LUTs (i.e., at least one compressed LUT), stored on board device 100 in storage means 102. The invention does not require that the set of compressed transform representative LUTs be stored within the image processing device per se (as shown in FIG. 1). All that is required is that the image processing device have access to the means for storing this set of LUTs.

Also depicted in FIG. 1 are user transform select means 103, delay means 104, comparator means 105 decompressor means 106 and transform processing means 107 (including working memory 108), all of which are shown included in the illustrative embodiment of image processing device 100 being described with reference to FIG. 1.

User transform select means 103 (which may be easily realized, for example, using a software switch), is intended to provide a mechanism for allowing user input (as shown on link 190) to be utilized to select one of the Q compressed transform representative LUTs stored in storage means 102, for application to the image data presented to transform processing means 107 by the image data input means (such as scanner 101).

Input image data is provided (normally in a bit serial fashion) to transform processing means 107, where it is processed using a decompressed LUT stored, at least temporarily, in working memory 108.

According to a preferred embodiment of the invention, information regarding the identity of the transform representative LUT selected by the user (or in alternate embodiments of the invention, automatically selected by, for example, data processing equipment), is supplied to both storage means 102, and to the delay means 104/comparator means 105 combination via communication link 160, as shown in FIG. 1.

According to one embodiment of the invention, the delay means 104/comparator means 105 combination functions (i.e., the delay period is chosen and the comparator operates), such that a comparator means output signal, enabling decompressor means 106, is provided (via enable link 175) only after enough time passes for (a) decompressor means 106 to be loaded with the compressed LUT selected by the user, and only if (b) comparator means 105 determines that the selected LUT was not previously selected, decompressed and in working memory (e.g., memory 108), accessible to (or within) transform processing means 107.

The delay means 104/comparator means 105 combination contemplated by the embodiment of the invention depicted in FIG 1, may be readily implemented by those skilled in the art using, for example, discrete logic and/or software.

If the selected transform is available to transform processing means 106 in decompressed form, decompressor means 105, according to the preferred embodiment of the invention, is not enabled since decompression of the selected LUT is unnecessary.

In an alternate embodiment of the invention, the delay means 104/comparator means 105 combination (or functionally equivalent logic or software), could be used to simply determine if a user selected compressed LUT is the same as the immediately preceding compressed LUT selected, without checking whether the decompressed version of the LUT was loaded into decompressor means 106 or still resides in memory.

In yet another alternate embodiment of the invention, a check could be made on the availability (to transform processing means 107), in decompressed form, of a user (or machine) selected compressed LUT prior to loading the compressed version of the LUT into decompression means 105. In this case, the decompression means enable signal shown on link 175 would not be need; the selected compressed LUT would only be loaded into decompression means 105 if in fact it needed to be decompressed.

The aforementioned illustrative alternate embodiments of the invention (and variants thereof, all of which are also contemplated by the invention), function to determine if a selected LUT already exists in a decompressed form available to transform processing means 107, to avoid unnecessarily having to decompress a selected LUT.

Further alternate embodiments of the invention are directed to image processing devices and systems which are not concerned with having to decompress a selected LUT that may already exist in decompressed form. In these devices and systems, delay means 104, comparator means 105, and links 160 and 175, all shown in FIG. 1, would be unnecessary to practice the invention. In fact, the invention could then be practiced using only the remaining components depicted in FIG. 1.

Assuming the selected compressed LUT needs to be decompressed, then the decompression is performed by decompressor means 106. The output of decompressor means 106 (the decompressed version of the selected LUT) is then stored in the aforementioned working memory accessible to transform processing means 107.

It should be recalled that the compressed LUTs are generated and compressed offline, and then stored in memory means (such as memory means 102) associated with (or included within) the image processing devices and system which are the subject of the instant invention.

LUT data may, as indicated hereinbefore, be compressed using a wide range of well known data compression techniques ranging from lossless to lossy encoding schemes, and from single layer to hierarchical encoding schemes. The "decoder" (such as decompression means 106) need only be consistent with the encoder used to create the compressed LUTs, and once again may readily be implemented in software, by those skilled in the art, assuming that the LUT encoding (compression) scheme is known.

Transform processing means 107 now has the necessary information in working memory to perform the user selected transform, namely (1) the bit serial presentation of the input image data, and (2) the decompressed version of the selected transform representative LUT. The image data, according to the invention, is then transformed in accordance with the selected transform, from a first representation to another representation.

Such transformations may, for example, be used (as indicated hereinabove) to convert image data from a device dependent color space into a device independent color space, to perform other types of user defined transforms, and to calibrate a given image processing device, etc. The apparatus depicted in FIG. 1 could, for example, be used to convert scanned data from a device dependent color representation such as RGB to a device independent representation such as L*a*b*.

The transformed image data may also be further processed, stored, and/or transmitted depending on the nature of the device or system in which the transformation was performed.

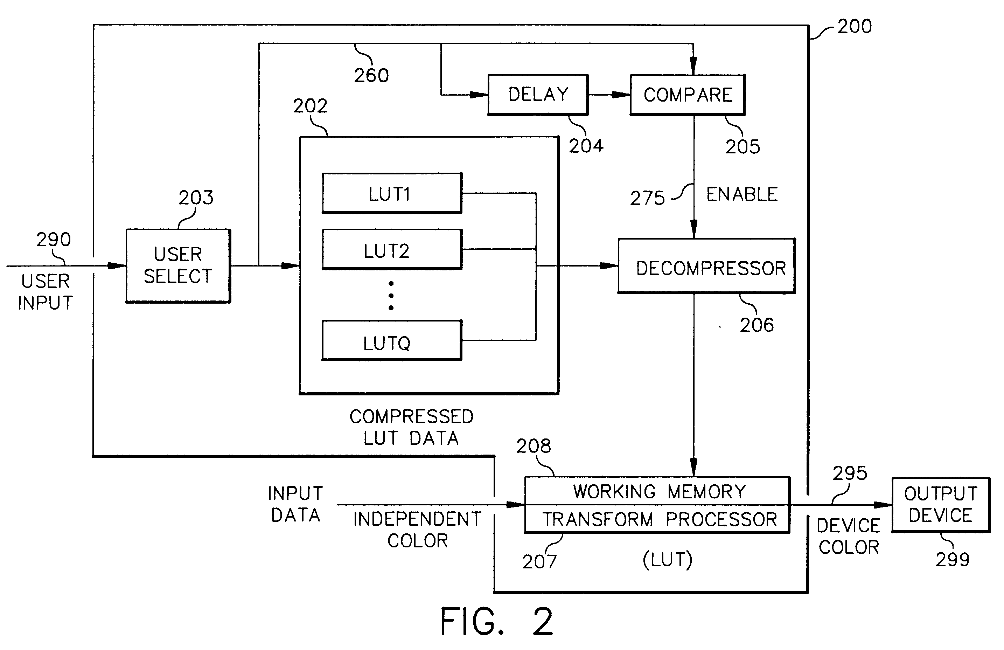

Reference should now be made to FIG. 2 which depicts, in the form of an equipment block diagram (which also serves as a process flow chart), the components of the same exemplary image processing device depicted in FIG. 1, followed by (again, for the sake of illustration only) image output means 299. In the illustrative application of the invention depicted in FIG. 2, the Q compressed transform representative LUTs stored are used to transform input image data from a device independent color space to a device (output means 299) dependent color space.

Image processing device 200, as depicted in FIG. 2, is shown driving output means 299 Via link 295. Output means 299 may, for example, be realized by a commercially available printer, such as the Kodak XL7720 printer (which is a digital thermal dye transfer device having a special purpose CPU on board for image manipulation), or other types of data output means which may or may not include data storage and/or processing capabilities.

The image data output means and the image processing devices (and systems) contemplated by the invention, may be separate units as shown in FIG. 2 (output means 299 and image processing device 200 are shown as separate units coupled by link 295). However, the image processing components depicted as part of device 200 in FIG. 2 may be included as part of image data output means per se, so long as sufficient memory and processing power are resident in or associated with the output means to enable the invention to be practiced in the manner described herein.

FIG. 2 goes on to show, in accordance with the teachings of a preferred embodiment of the invention, a set of Q compressed transform representative LUTs (i.e., at least one compressed LUT) stored on board within image processing device 200 in storage means 202.

The remainder of the components depicted in FIG. 2 (user select means 203, delay means 204, comparator means 205, decompressor means 206, transform processing means 207, working memory 208 and links 260, 275 and 290), all correspond respectively to means 103-108; and links 160, 175 and 190, previously described with reference to FIG. 1. The same remarks regarding alternate embodiments of the invention, the ability to store the compressed LUTs either on board an image processing device contemplated by the invention (or in associated memory), etc., all apply to the apparatus and process flow diagram illustrated in FIG. 2.

Transform processing means 207, once it has the necessary information in working memory to perform the user selected transform (namely, (1) the bit serial presentation of the input image data, and (2) the decompressed version of the selected transform representative LUT); transforms the input image data in accordance with the selected transform, from a first representation to another representation.

Such transformations may, for example, be used (as indicated hereinabove) to convert image data from a device independent color space into a device dependent color space (for example, the color space recognized by output means 299), and may also be used to perform other types of user defined transforms, calibration functions, etc. The apparatus depicted in FIG. 2 could, for example, be used to convert device independent color data, such as XYZ image data, into an output device dependent color space, such as CMYK.

Once again, the transformed image data may also be further processed, stored, and/or transmitted depending on the nature of the device or system in which the transformation was performed.

The invention allows for a plurality of N TO M-dimensional transformations to be implemented on a single image processing device without significant impact on memory requirements.

Depending on the application and the compression algorithm, the reconstructed LUT may be lossless,lossy, or a multi-layered. It should be noted that multi-layered reconstruction is possible only if the compression algorithm is hierarchical.

For the sake of illustration only, without intending to limit the scope or set of applications for the invention, a commercially available example of an image processing system in which the invention may be practiced is the Eastman Kodak Company "Premier" System ("Premier" is a trademark of the Eastman Kodak Company). The Premier System is an end to end image editing work station that includes a plurality of image processing devices including a film reader (a scanner), a digitizer, a film writer (an output device), and data processing means.

In the case of the Premier System the data processing means (a Unix based work station), is capable of performing the functions of the above described transform processing means, decompressor means, and even the aforementioned delay and comparator functions. The work station also has sufficient memory to accommodate the on board storage of the compressed LUTs, and to provide working memory to hold input image data being processed (presumably being provided in bit serial fashion) and decompressed versions of selected LUTs. Other data processing means which may be used to implement the invention taught herein include commercially available microprocessor chips, personal computing systems, microprocessor boards, etc.

Other examples of commercially available devices and systems in which the invention may find direct or indirect application are PhotoCD players, such as Kodak's PCD-870 PhotoCD player, digitizers, film writers, etc., and more generally any type of image processing device or system which utilizes transforms stored as LUTs for image processing purposes.

In these exemplary systems, the compressed LUTs can be stored in memory included in, or associated with, a given device or system. As indicated hereinbefore, the choice of the LUT to be decompressed could, for example, be user selected or automatically selected based on user defined criteria using, for example, software switching techniques well known to those skilled in the art.

The decompression of a compressed LUT may be implemented in software and may be performed by, for example, the processing unit existing on a given device's imaging platform, by an associated PC, and even by the aforementioned transform processing means (prior to applying the selected transform to image data), etc. Once again, the software for performing the decompression can easily be generated by those skilled in the art assuming the compression technique used to create the selected compressed LUT is known.

Finally, at least in the case of the commercially available devices described herein, the actual transformation of image data may be performed by any data processor having access to both the decompressed version of a selected LUT and the image data itself.

What has been described in detail hereinabove are methods and apparatus meeting all of the aforestated objectives. As previously indicated, those skilled in the art will recognize that the foregoing description has been presented for the sake of illustration and description only. It is not intended to be exhaustive or to limit the invention to the precise form disclosed, and obviously many modifications and variations are possible in light of the above teaching.

For example, the invention may be applied to image signal processing applications in general, whether in the context of processing video, 3-D or still images, and/or for processing monochrome, multi-spectral and/or multi-band image data.

The embodiments and examples set forth herein were presented in order to best explain the principles of the instant invention and its practical application to thereby enable others skilled in the art to best utilize the instant invention in various embodiments and with various modifications as are suited to the particular use contemplated.

It is, therefore, to be understood that the claims appended hereto are intended to cover all such modifications and variations which fall within the true scope and spirit of the invention.

The invention is summarized as follows:
1. An image processing device, having storage means associated therewith and a set of N to M-dimensional transform representative look-up tables (LUTs) stored in said storage means in compressed form, for transforming image data input to said device from a first representation to another representation, comprising:
   (a) means for selecting a transform representative LUT stored in said storage means;
   (b) means for decompressing the selected LUT; and
   (c) means for applying, to said image data, the transform corresponding to the decompressed LUT to effect the transformation of said input image data from said first representation to another representation.
2. An image processing device, including storage means associated therewith and a set of N to M-dimensional transform representative look-up tables (LUTs) stored in said storage means in compressed form, for transforming image data input to said device from a first representation to another representation, comprising:
   (a) means for selecting a compressed transform representative LUT stored in said storage means;
   (b) means for determining if the selected compressed transform representative LUT is available to the image processing device in a decompressed form;
   (c) means for decompressing the selected LUT whenever the Selected LUT is not available to the image processing device in a decompressed form; and
   (d) means for applying the transform corresponding to the decompressed selected LUT to said input image data to effect the transformation of said input image data from said first representation to said second representation.
3. Apparatus as set forth in 2 wherein said means for determining is operative to compare the identity of the selected LUT with the identity of a previously selected LUT decompressed by said means for decompressing.
4. An image processing device for transforming input image data from a first representation to another representation by applying a transform represented by a compressed LUT stored in memory associated with the image processing device, comprising:
   (a) means for decompressing said compressed LUT; and
   (b) means for applying the transform corresponding to the decompressed LUT to the input image data.
5. An image processing device, comprising:
   (a) means for storing a set of compressed LUTs, wherein each LUT in said set represents an N to M-dimensional transform for converting image data from one representation to another representation;
   (b) means for selecting, from said means for storing, a compressed LUT from said set of LUTs;
   (c) means for decompressing the selected compressed LUT;
   (d) means for loading the decompressed LUT into a working memory associated with transform processing means;
   (e) means for inputting the image data to be transformed; and
   (f) transform processing means, including working memory associated therewith, coupled to said means for inputting and said means for loading, wherein said transform processing means is operative to transform said input image data from one representation to another representation in accordance with the N to M-dimensional transformation represented by the compressed LUT that was selected, decompressed and loaded into said working memory.
6. An image processing device which utilizes compressed transform representative data, stored in memory associated with the image processing device, for transforming image data from a first representation to another representation, comprising:
   (a) means for decompressing stored compressed transform representative data; and
   (b) transform processing means, coupled to said means for decompressing, for applying the transform represented by the decompressed transform representative data to said image data.
7. Apparatus as set forth in 6 wherein said compressed transform representative data comprises a set of compressed look-up tables (LUTs) each representing an N to M-dimensional transform.
8. Apparatus as set forth in 6 wherein said means for decompressing further comprising means for determining if said compressed transform representative data is available to said transform processing means in decompressed form.
9. Apparatus as set forth in 8 wherein said means for decompressing is operative to decompress said stored compressed transform representative data only when the decompressed form of said stored compressed transform representative data is not otherwise available to said transform processing means.
10. Apparatus as set forth in 6 further comprising means for selecting a transform to be applied to said image data in the event said stored compressed transform representative data represents a plurality of transforms.
11. An image processing device, including means for inputting image data to said device for processing, comprising:
   (a) storage means including a set of compressed transform representative LUTs stored therein; and
   (b) means for applying transforms, represented by the compressed LUTs stored in said storage means, to image data input to the image processing device.
12. An image processing device as set forth in 11 further comprising means for selecting a transform, represented by a compressed LUT included in said set of compressed LUTs stored in said storage means, for application to said image data.
13. Apparatus as set forth in 12 wherein said means for selecting further comprises a software switch.
14. Apparatus as set forth in 12 wherein said means for applying transforms represented by the compressed LUTs stored in said storage means further comprises:
   (a) decompression means, coupled to said storage means, for decompressing the compressed LUT representing the transform selected by said means for selecting; and
   (b) transform processing means having access to both the image data input to the image processing device and the decompressed version of the compressed LUT representing the transform selected by said means for selecting.
15. Apparatus as set forth in 14 wherein said image processing device further comprises control means for selectively decompressing compressed LUTs corresponding to transforms selected by said means for selecting.
16. Apparatus as set forth in 14 wherein at least one transform represented by a compressed LUT stored in said storage means converts image data from a device dependent color space to a device independent color space.
17. Apparatus as set forth in 14 wherein at least one transform represented by a compressed LUT stored in said storage means converts image data from a device independent color space to a device dependent color space.
18. Apparatus as set forth in 14 wherein at least one transform represented by a compressed LUT stored in said storage means may be used to calibrate an image processing device.
19. Apparatus as set forth in 14 wherein at least a plurality of transforms, represented by a compressed LUTs stored in said storage means, are capable of converting image data input to the image processing device into data formats which can be used by the multiplicity of devices attached to the image processing device.
20. A method for transforming image data input to an image processing device from a first representation to another representation, comprising the steps of:
   (a) storing a set of N to M-dimensional transform representative look-up tables (LUTs) in compressed form;
   (b) selecting one of the stored compressed transform representative LUTs so that the represented transform may be applied to said image data;
   (c) decompressing the selected LUT; and
   (d) transforming the image data from said first representation to another representation by applying the transform represented by the selected decompressed LUT to said image data.
21. A method for transforming image data input to an image processing device from a first representation to another representation, comprising the steps of:
   (a) storing a set of N to M-dimensional transform representative look-up tables (LUTs) in compressed form;
   (b) selecting one of the stored compressed transform representative LUTs for application to said image data; and
   (c) determining if the selected compressed transform representative LUT exists in working memory, associated with a transform processor, in decompressed form.
22. A method as set forth in 21 further comprising the step of decompressing the selected compressed transform representative LUT whenever it is determined that said selected LUT does not exist in said working memory in decompressed form.
23. A method as set forth in 22 further comprising the step of transforming the image data from said first representation to another representation by applying the transform represented by the decompressed version of the selected LUT to said image data.
24. A method for transforming image data input to an image processing device from a first representation to another representation, wherein said image processing device has storage means associated therewith and a set of N to M-dimensional transform representative look-up tables (LUTs) stored in said storage means in compressed form, comprising the steps of:
   (a) selecting a transform representative LUT stored in said storage means;
   (b) decompressing the selected LUT; and
   (c) applying, to said image data, the transform corresponding to the decompressed LUT to effect the transformation of said input image data from said first representation to another representation.
25. A method for transforming image data input to an image processing device from a first representation to another representation, wherein said image processing device has storage means associated therewith and a set of N to M-dimensional transform representative look-up tables (LUTs) stored in said storage means in compressed form, comprising the steps of;
   (a) selecting a compressed transform representative LUT stored in said storage means;
   (b) determining if the selected compressed transform representative LUT is available to the image processing device in a decompressed form;
   (c) decompressing the selected LUT whenever the selected LUT is not available to the image processing device in a decompressed form; and
   (d) applying the transform corresponding to the decompressed selected LUT to said input image data to effect the transformation of said input image data from said first representation to said second representation.
26. A method as set forth in 25 wherein said step of determining further comprises the step of comparing the identity of the selected LUT with the identity of a previously selected LUT.
27. A method for transforming image data input to an image processing device from a first representation to another representation utilizing a compressed look-up table (LUT) stored in memory associated with the image processing device, comprising the steps of:
   (a) decompressing said compressed LUT; and
   (b) applying the transform corresponding to the decompressed LUT to the image data.
28. A method for transforming image data input to an image processing device from a first representation to another representation, comprising the steps of:
   (a) storing a set of compressed LUTs in memory means included within said image processing device, wherein each LUT in said set represents an N to M-dimensional transform for converting image data from a one representation to another representation;
   (b) selecting, from said memory means, a compressed LUT from said set of LUTs;
   (c) decompressing the selected compressed LUT;
   (d) loading the decompressed LUT into a working memory associated with transform processing means;
   (e) inputting the image data to be transformed; and
   (f) transforming the input image data from one representation to another representation in accordance with the N to M-dimensional transformation represented by the compressed LUT that was selected, decompressed and loaded into said working memory.
29. A method for transforming image data input to an image processing device from a first representation to another representation utilizing a compressed transform representative data stored in memory associated with the image processing device, comprising the steps of:
   (a) decompressing stored compressed transform representative data; and
   (b) applying the transform represented by the decompressed transform representative data to said image data.
30. A method for transforming image data input to an image processing device from a first representation to another representation, comprising the steps of:
   (a) storing a set of compressed LUTs in memory means included within said image processing device, wherein each LUT in said set represents an N to M-dimensional transform for converting image data from a one representation to another representation; and
   (b) applying transforms, represented by the compressed LUTs stored in said storage means, to image data input to the image processing device.

## Claims

1. An image processing device, having storage means associated therewith and a set of N to M-dimensional transform representative look-up tables (LUTs) stored in said storage means in compressed form, for transforming image data input to said device from a first representation to another representation, comprising:
(a) means for selecting a transform representative LUT stored in said storage means;
(b) means for decompressing the selected LUT; and
(c) means for applying, to said image data, the transform corresponding to the decompressed LUT to effect the transformation of said input image data from said first representation to another representation.

2. An image processing device, including storage means associated therewith and a set of N to M-dimensional transform representative look-up tables (LUTs) stored in said storage means in compressed form, for transforming image data input to said device from a first representation to another representation, comprising:
(a) means for selecting a compressed transform representative LUT stored in said storage means;
(b) means for determining if the selected compressed transform representative LUT is available to the image processing device in a decompressed form;
(c) means for decompressing the selected LUT whenever the selected LUT is not available to the image processing device in a decompressed form; and
(d) means for applying the transform corresponding to the decompressed selected LUT to said input image data to effect the transformation of said input image data from said first representation to said second representation.

3. An image processing device for transforming input image data from a first representation to another representation by applying a transform represented by a compressed LUT stored in memory associated with the image processing device, comprising:
(a) means for decompressing said compressed LUT; and
(b) means for applying the transform corresponding to the decompressed LUT to the input image data.

4. An image processing device, comprising:
(a) means for storing a set of compressed LUTs, wherein each LUT in said set represents an N to M-dimensional transform for converting image data from one representation to another representation;
(b) means for selecting, from said means for storing, a compressed LUT from said set of LUTs;
(c) means for decompressing the selected compressed LUT;
(d) means for loading the decompressed LUT into a working memory associated with transform processing means;
(e) means for inputting the image data to be transformed; and
(f) transform processing means, including working memory associated therewith, coupled to said means for inputting and said means for loading, wherein said transform processing means is operative to transform said input image data from one representation to another representation in accordance with the N to M-dimensional transformation represented by the compressed LUT that was selected, decompressed and loaded into said working memory.

5. An image processing device which utilizes compressed transform representative data, stored in memory associated with the image processing device, for transforming image data from a first representation to another representation, comprising:
(a) means for decompressing stored compressed transform representative data; and
(b) transform processing means, coupled to said means for decompressing, for applying the transform represented by the decompressed transform representative data to said image data.

6. An image processing device, including means for inputting image data to said device for processing, comprising:
(a) storage means including a set of compressed transform representative LUTs stored therein; and
(b) means for applying transforms, represented by the compressed LUTs stored in said storage means, to image data input to the image processing device.

7. A method for transforming image data input to an image processing device from a first representation to another representation, comprising the steps of:
(a) storing a set of N to M-dimensional transform representative look-up tables (LUTs) in compressed form;
(b) selecting one of the stored compressed transform representative LUTs so that the represented transform may be applied to said image data;
(c) decompressing the selected LUT; and
(d) transforming the image data from said first representation to another representation by applying the transform represented by the selected decompressed LUT to said image data.

8. A method for transforming image data input to an image processing device from a first representation to another representation, comprising the steps of:
(a) storing a set of N to M-dimensional transform representative look-up tables (LUTs) in compressed form;
(b) selecting one of the stored compressed transform representative LUTs for application to said image data; and
(c) determining if the selected compressed transform representative LUT exists in working memory, associated with a transform processor, in decompressed form.

9. A method for transforming image data input to an image processing device from a first representation to another representation, wherein said image processing device has storage means associated therewith and a set of N to M-dimensional transform representative look-up tables (LUTs) stored in said storage means in compressed form, comprising the steps of:
(a) selecting a transform representative LUT stored in said storage means;
(b) decompressing the selected LUT; and
(c) applying, to said image data, the transform corresponding to the decompressed LUT to effect the transformation of said input image data from said first representation to another representation.

10. A method for transforming image data input to an image processing device from a first representation to another representation, wherein said image processing device has storage means associated therewith and a set of N to M-dimensional transform representative look-up tables (LUTs) stored in said storage means in compressed form, comprising the steps of:
(a) selecting a compressed transform representative LUT stored in said storage means;
(b) determining if the selected compressed transform representative LUT is available to the image processing device in a decompressed form;
(c) decompressing the selected LUT whenever the selected LUT is not available to the image processing device in a decompressed form; and
(d) applying the transform corresponding to the decompressed selected LUT to said input image data to effect the transformation of said input image data from said first representation to said second representation.
